Europäisches Patentamt

European Patent Office

Office européen des brevets

(11) Publication number: **0 284 819 B1**

# EUROPEAN PATENT SPECIFICATION

(45) Date of publication of patent specification: **29.07.92**  (51) Int. Cl.⁵: **F01D 9/02**, F01D 25/14

(21) Application number: **88103399.7**

(22) Date of filing: **04.03.88**

(54) **Gas turbine combustor transition duct forced convection cooling.**

(30) Priority: **01.04.87 CA 533623**

(43) Date of publication of application:
**05.10.88 Bulletin 88/40**

(45) Publication of the grant of the patent:
**29.07.92 Bulletin 92/31**

(84) Designated Contracting States:
**BE CH DE FR GB IT LI NL SE**

(56) References cited:
**CH-A- 633 347**
**DD-A- 127 301**
**DE-A- 2 741 063**

(73) Proprietor: **WESTINGHOUSE CANADA INC.**
**120 King Street West**
**Hamilton Ontario L8P 4V2(CA)**

(72) Inventor: **Butt, Graham Philip**
**38 Lilac Court**
**Ancaster, Ontario L9G 4E3(CA)**

(74) Representative: **Fleuchaus, Leo, Dipl.-Ing. et al**
**Fleuchaus & Wehser Melchiorstrasse 42**
**W-8000 München 71(DE)**

## Description

This invention relates to gas turbines and in particular, to means for reducing the temperature of the surface of transition ducts within such gas turbines.

In a typical gas turbine engine air discharged from the compressor enters a combustor shell where the air passes around transition ducts before flowing into the combustor baskets. In the combustor baskets, the air is mixed with fuel and burnt at high temperatures. The combustion gases at high temperatures and pressure then flow from the baskets down the transition ducts to enter the turbine where they are expanded to produce work. In applications where the mean combustion gas temperature exceeds 1100°C the transition ducts, made from conventional high temperature alloys, begin to show regions of deterioration on the upper surface after short periods of service. The lower and side surfaces of the transition ducts are usually adequately cooled to eliminate this problem but the upper surfaces at not so cooled because of the normal flow of the gas from the compressor.

In the past, efforts have been made to reduce the temperature of the upper surface of the transition ducts by providing a plurality of small cooling holes in the upper surface. In this arrangement, the air from the compressor is permitted to flow into the transition duct so as to produce a film of cooling air along the upper surface. However, this air has the effect of distorting the combuster gas temperature profile and reducing the efficiency of the turbine.

Improved cooling systems are disclosed in CH-A-633 347 and DD-A-127 301. The arrangements provide baffle structures around the transitions duct and the combustor to form an air cooling channel around the transition duct and part of the combustor with cooling air passages formed in the baffle structure through which air flow into the cooling air channel around the transition duct and combustor is controlled.

However, in this arrangement the supply of cooling air to the transition duct and the combustor is constrained by air passages before it reaches the surfaces to be cooled so that relatively cool air jets are directed at the transition duct walls. Such air jets provide for localized uneven cooling of the transition duct or combustor walls unless relatively expensive and sensitive additional baffling deflecting the air jets is provided. It is also necessary to constrain the cooling air flow all around the transition duct and combustor walls for adequate cooling.

It is the principal object of the present invention to provide a gas turbine structure which provides for adequate cooling of the transition duct structure.

With this object in view, the present invention resides in a gas turbine as defined in claim 1.

In contrast to the above cited prior art, in the arrangement according to the present invention a saddle-shaped member is provided which is disposed only about the outer, with respect to the air flow around the duct-downstream surface area of the transiton duct to form an air channel between the saddle-shaped member and the outer wall area of the transition duct which saddle-shaped member is perforated along the middle-line of the top surface through which perforations the air flow from the compressor is constrained to pass on its way from around the transition duct to the combuster.

In this arrangement, not the relative cool air flow to the transition duct but the air flow from the transition duct is constrained and the air jets formed by such constraints are not directed on to the transition duct but away from the transition duct. The arrangement provides for effective cooling of the transition duct surfaces at the - with respect to the cooling air flow - downstream end of the transition duct in a simple inexpensive manner and without subjecting the transition duct to large localized temperature transients.

The invention will become more readiliy apparent from the following description thereof shown, by way of example only, in the drawings in which:

Fig. 1     is a view, partially in section, of a portion of a gas turbine of the prior art, showing the normal airflow from the compressor discharge into the combustor basket;

Fig. 2     is a view, partially in section, of a similar gas trubine incorporating the invention;

Fig. 3     is a section of a portion of the transition duct and the associated saddle member along the section line DD in Fig.2; and

Fig. 4     is a section similar to Fig.3 showing an alternate structure.

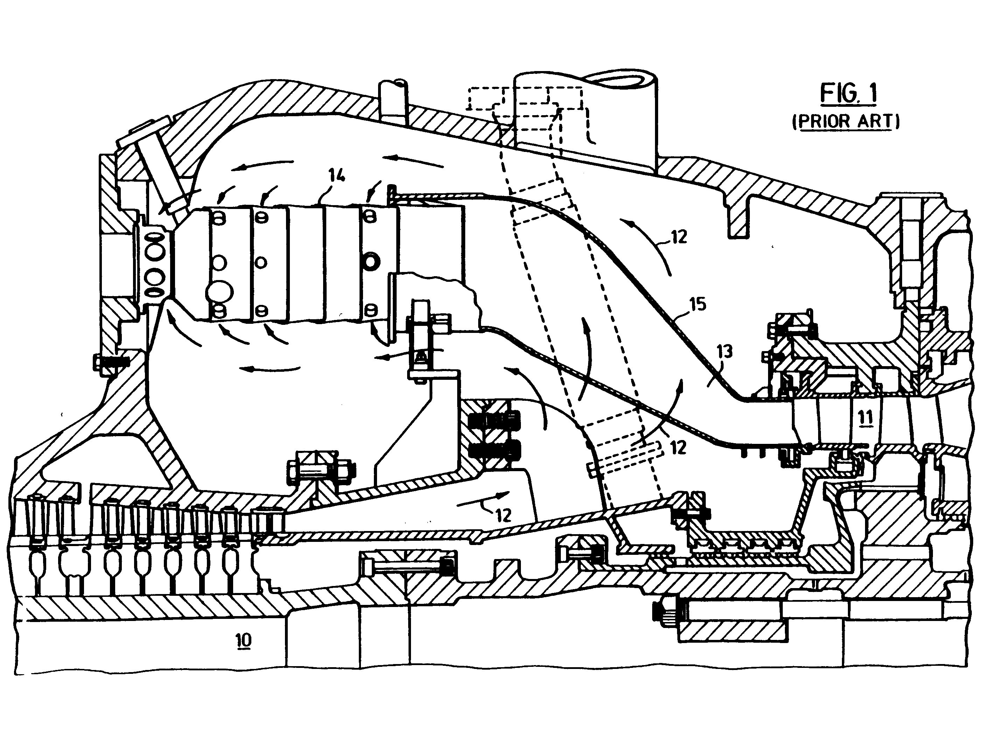

Considering first Fig.1, the prior art structure, it will be seen that the gas turbine illustrated comprises a compressor section 10 and a power section 11. The compressed air from the compressor section 10 flows in the direction indicated in arrows 12 from the output end of the compressor, past the transition ducts 13, back over the combustor basket 14 and in through the various perforations in the basket, where it mixes with the fuel and is burned. The output of the combustor, is transmitted through the transition duct to the power section 11.

As will be understood, the turbine includes a number of combustors and transition ducts, the latter being arranged in a circle around teh central portion of the turbine. The airflow, in passing the transition ducts, therefore first encounters the lower surface of the transition duct and then passes between the duct and up over the outer surface or directly back from the lower surface, to the combustor. It will be seen that only a small portion of the airflow would normally pass over the upper surface 15 of the transition duct. It will be evident therefore that the temperature of this portion of the transition duct will be higher than that of the other surfaces, such as the lower surface or the side surface, which are exposed to greater flows of air.

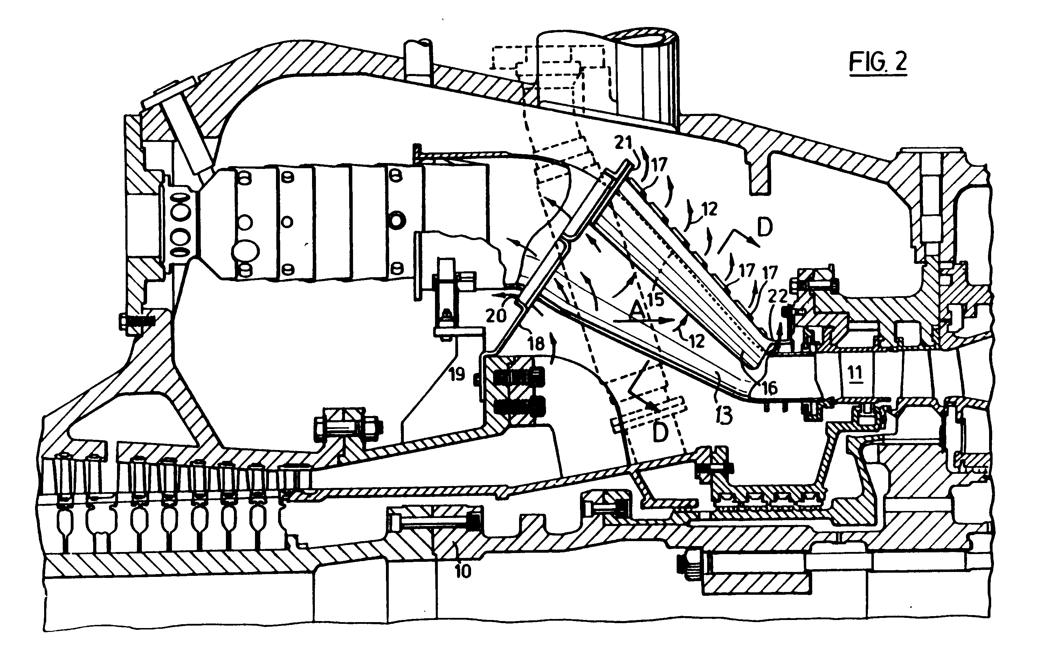

Turning now to Figure 2, it will be seen that as before the gas turbine includes a compressor section 10 and a power section 11 and the air from the compressor flows toward the transition ducts 13. However, in accordance with the invention, there is provided a plurality of saddles 16 surrounding the upper portion of the transition ducts and forming, between the saddle 16 and the outer wall 15 of the transition duct 13, an air passage through which a portion 12 of the airflow is constrained to pass before proceeding to the combustor.

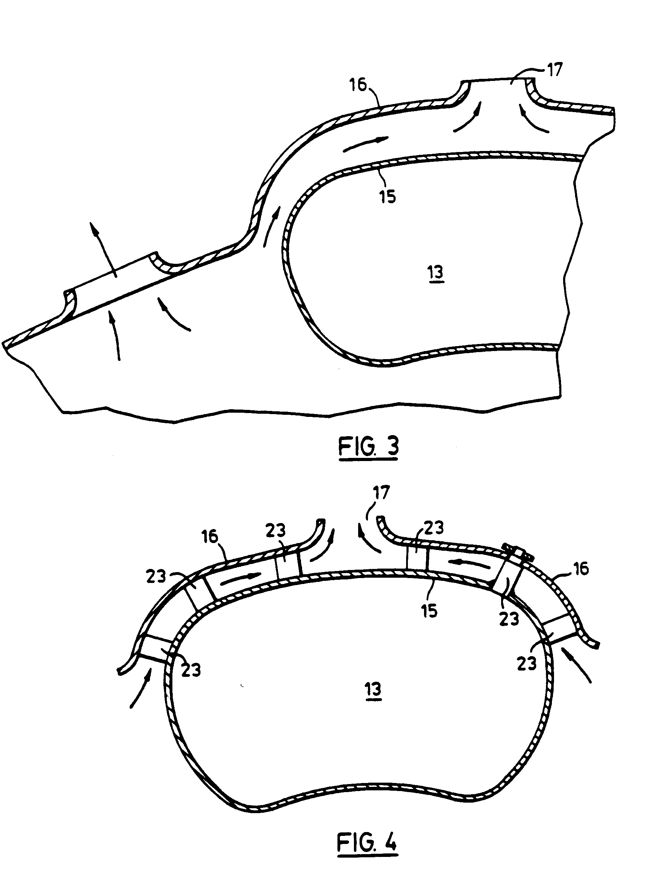

As shown in greater detail in Figure 3, a portion of the air passes between the transition duct outer wall 15 and the saddle 16, thus ensuring that the airflows over the upper surface of the transition duct 13 and thereby cools it. Each transition duct 13 has associated with it a saddle 16, the saddle being shaped to conform generally to the contours of the transition duct 13 and including a plurality of perforations near its center line, designated 17, and an extended edge portion which extends outward towards the next adjacent saddle member and forms therebetween a smooth gap through which a portion of the air may flow as seen more clearly in Figure 3.

To constrain the air to flow under the saddles 16 and around over the upper surface of the transition duct 13 a seal wall is provided in the form of a conical member 18, fastened at its inner edge 19, to the housing of the compressor 10 and having apertures through which the various transition ducts pass, such as aperture 20. It will be seen that this aperture is slightly larger than the diameter of the transition duct and thereby permits some flow of air around the transition duct 13 through the seal wall through the gap between the seal wall and the transition duct 13.

The saddle 16 is fastened at its upper edge 21 to the seal wall 18 and at its lower edge 22, to the housing of the power section 11. No effort is made to constrain the total flow to pass around under the saddles and across the upper surface of the transition ducts. The spaces between the saddles and the spaces between the seal wall and the transition duct permit a parallel bypass flow. The formation of these bypass flows and also the ducted flow, out through the orifices 17, is maintained as smooth as possible to reduce turbulence since turbulence would result in greater losses in the operation of the turbine and therefore a less efficient turbine.

As previously indicated, depending upon the velocity head of the compressor discharge air, it may not be necessary to use a seal wall. In such case the saddles are simply mounted on the transition duct, as shown in Figure 4, by means of support studs 23 welded to the surface of the transition duct and fastened at their outer end to the saddle. The air passing between adjacent transition ducts encounters the edge of the saddles and a portion is scooped up and caused to flow between the saddle and the surface of the transition duct, associated with that particular saddle. The studs 23 perform two duties. Not only do they support the saddle piece, they also provide a heat transfer surface, transmitting the heat from the surface of the transition duct to the air which passes around the studs 23.

It is evident that not only may a number of such studs be used to enhance the heat transfer, thus permit the cooling of the transition duct with minimal disturbance of the airflow, but also further means, such as ribs, can be provided on the saddle piece or between the saddle piece and the transition duct to improve the heat exchange between the transition duct and the air flowing past it. Such arrangements obviously will reduce the interference and loss of pressure in the airflow which might be produced by other structures, while at the same time permitting the transition duct 13 to be used at higher temperatures without degradation of the material of the duct.

## Claims

1. A gas turbine including a compressor section (10), a combustor section, a power turbine section (11), and a transition duct (13) coupling said combustor to said power turbine section (11); and means (16) disposed adjacent said transition duct (13) to direct the airflow from said compressor section (10) to said combustor substantially uniformly over the surfaces of said transition duct (13),

   **characterized in**

   that said means to direct the airflow over said transition duct (13) consists of a saddle-shaped member (16) disposed about and spaced from the outer, with respect to the airflow around the duct-downstream surface area of said transition duct (13) to form an air channel between said saddle-shaped member (16) and the outer wall area (15) of said transition duct (13), said saddle-shaped member (16) having air discharge perforations (17) along the middle-line of the top surface of the saddle-shaped member through which at least a portion of the airflow (12) from the compressor is constrained to pass on its way from around the transition duct to the combustor so as to equalize the surface temperature of said transition duct (13).

2. A gas turbine as claimed in claim 1, characterized in that said saddle-shaped member (16) is supported on said transition duct (13) by means of a plurality of studs (23) connected to said duct (13) and said member (16).

3. A gas turbine as claimed in claim 1 or 2, characterized in that a seal wall (18) is provided through which said transition duct (13) extends, said seal wall (18) separating the compressor section from said combustor and forcing the airflow from the compressor to flow through apertures (20) in said wall (18).

4. A gas turbine as claimed in claim 3, characterized in that said saddle-shaped member (16) is mounted at its one end on said seal wall (18) and at its other end on the frame of said power turbine section (11).

5. A gas turbine as claimed in any of claims 1 to 4, characterized in that said saddle-shaped member (16) includes a plurality of ribs on its inner surface.

## Revendications

1. Turbine à gaz comportant une section de compresseur (10), une section de chambre de combustion, une section de turbine électrogène (11) et un canal de transition (13) raccordant ladite chambre de combustion à ladite section de turbine électrogène (11) ; et des moyens (16) disposés à côté dudit canal de transition (13) pour diriger un flux d'air de ladite section de compresseur (10) à ladite chambre de combustion de manière substantiellement uniforme sur les surfaces dudit canal de transition (13),
   **caratérisée en ce que**
   lesdits moyens pour diriger le flux d'air sur ledit canal de transition (13) consistent en un élément en forme de selle (16) disposé autour et à distance de la zone de surface extérieure en aval par rapport au flux d'air autour du canal d'évacuation dudit canal de transition (13) pour former un canal d'air entre l'élément en forme de selle (16) et la zone de paroi extérieure (15) dudit canal de transition (13), ledit élément en forme de selle (16) ayant des perforations d'évacuation (17) le long de la ligne médiane de la surface supérieure de l'élément en forme de selle à travers lequel au moins une partie du flux d'air (12) venant du compresseur est contrainte à passer sur son passage de la périphérie du canal de transition à la chambre de combustion de manière à égaliser la température de surface dudit canal de transition (13).

2. Turbine à gaz selon la revendication 1, caractérisée en ce que ledit élément en forme de selle (16) s'appuie contre ledit canal de transition (13) au moyen d'une pluralité de billes (23) connectées audit canal (13) et audit élément (16).

3. Turbine à gaz selon les revendications 1 ou 2, caractérisée en ce qu'une paroi étanche (18) est prévue, à travers laquelle ledit canal de transition (13) traverse, ladite paroi étanche (18) séparant la section du compresseur de ladite section de chambre de combustion et forçant le flux d'air dudit compresseur à s'écouler à travers des ouvertures (60) dans ladite paroi (18).

4. Turbine à gaz selon la revendication 3, caractérisée en ce que ledit élément en forme de selle (16) est monté à l'une de ses extrémités sur ladite paroi étanche (18) et par son autre extrémité sur le cadre de ladite section de turbine électrogène (11).

5. Turbine à gaz selon l'une quelconque des revendications 1 à 4, caractérisée en ce que ledit élément en forme de selle (16) comporte une pluralité de nervures sur sa surface intérieure.

## Patentansprüche

1. Gasturbine einschließlich eines Verdichterabschnitts (10), eines Brennkammerabschnitts, eines Leistungsturbinenabschnitts (11) und eines Übergangskanals (13), der die Brennkammer mit dem Leistungsturbinenabschnitt (11) verbindet, sowie mit Mitteln (16), die an diesen Übergangskanal (13) anliegend angeordnet sind, um den Luftstrom im wesentlichen in gleichmäßiger Verteilung über die Flächen dieses Übergangskanals (13) vom Verdichterabschnitt (10) zur Brennkammer zu führen, dadurch gekennzeichnet, daß diese Mittel zur Führung des Luftstroms über diesen Übergangskanal (13) aus einem sattelförmigen Glied (16) bestehen, das um den - und im Abstand zu dem - äußeren, in Strömungsrichtung des Luftstroms nachgeschalteten Bereich um den Übergangskanal (13) herum angeordnet ist, um einen Luftkanal zwischen diesem sattelförmigen Glied (16) und dem Bereich der Außenwand (15) dieses Übergangskanals (13) zu bilden, wobei dieses sattelförmige Glied (16) mit Luftauslaßöffnungen (17) entlang der Mittellinie der oberen Fläche dieses sattelförmigen Glieds versehen ist, durch die wenigstens ein Teil des Luftstroms (12) vom Verdichter her zwangsläufig auf seinem Weg durch den Übergangskanal zur Brennkammer strömen muß, um die Oberflächentemperatur dieses Übergangskanals (13) auszugleichen.

2. Gasturbine gemäß Anspruch 1, dadurch gekennzeichnet, daß dieses sattelförmige Glied (16) auf diesem Übergangskanal (13) mittels einer Vielzahl von Stiftschrauben (23) gehaltert wird, die mit diesem Kanal (13) und mit diesem Glied (16) verbunden sind.

3. Gasturbine gemäß Anspruch 1 oder 2, dadurch gekennzeichnet, daß eine Sperrwand (18) vorgesehen ist, durch die sich dieser Übergangskanal (13) erstreckt, wobei diese Sperrwand (18) den Verdichterabschnitt von der Brennkammer trennt und den vom Verdichter kommenden Luftstrom zwingt, durch die Öffnungen (20) in dieser Wand (18) zu strömen.

4. Gasturbine gemäß Anspruch 3, dadurch gekennzeichnet, daß dieses sattelförmige Glied (16) mit einem Ende auf dieser Sperrwand (18) und mit dem anderen Ende auf dem Rahmen dieses Leistungsturbinenabschnitts (11) montiert ist.

5. Gasturbine gemäß einem beliebigen der Ansprüche 1 bis 4, dadurch gekennzeichnet, daß dieses sattelförmige Glied (16) an seiner Innenseite eine Vielzahl von Rippen aufweist.

FIG 1
(PRIOR ART)

FIG. 2

FIG. 3

FIG. 4